# EUROPEAN PATENT SPECIFICATION

(11) **EP 4 446 979 B1**
(45) Date of publication and mention of the grant of the patent: **14.01.2026**
(21) Application number: 23207732.1
(22) Date of filing: 03.11.2023
(51) Int. Cl.: G06T 7/00

(54) **SYSTEM FOR FINDING BLACK SPOTS IN SEPARATOR**
SYSTEM ZUM AUFFINDEN VON SCHWARZEN FLECKEN IN EINEM SEPARATOR
SYSTÈME POUR TROUVER DES TACHES NOIRES DANS UN SÉPARATEUR

(30) Priority: 10.04.2023 KR 20230047090
(43) Date of publication of application: 16.10.2024
(73) Proprietor: Samsung SDI Co., Ltd., Yongin-si, Gyeonggi-do 17084 (KR); NSYS Corporation, Cheonan-si, Chungcheongnam-do 31040 (KR)
(72) Inventor: Lyu, Seungwoo, Yongin-si, Gyeonggi-do 17084 (KR); Yu, Jungyi, Yongin-si, Gyeonggi-do 17084 (KR); Hwang, Changyeon, Yongin-si, Gyeonggi-do 17084 (KR); An, Leehwan, Yongin-si, Gyeonggi-do 17084 (KR); Moon, Bong-Kil, Cheonan-si, Chungcheongnam-do 31040 (KR)
(74) Representative: Gulde & Partner

(56) References cited:
- EP-A1- 4 254 262
- WO-A1-2022/114665
- HUBER JOSEF ET AL: "Non-destructive Quality Testing of Battery Separators", vol. 62, January 2017 (2017-01-01), NL, pages 423 - 428, XP093113222, ISSN: 2212-8271, Retrieved from the Internet <URL:https://www.ndt.net/article/ndt-review/papers/1-s2.0-S2212827116306205-main.pdf> [retrieved on 20231218], DOI: 10.1016/j.procir.2016.06.002
- DU BARET DE LIM� ARNAUD ET AL: "Impact of Electrode Defects on Battery Cell Performance: A Review", vol. 5, no. 10, 7 September 2022 (2022-09-07), XP093113221, ISSN: 2566-6223, Retrieved from the Internet <URL:https://onlinelibrary.wiley.com/doi/full-xml/10.1002/batt.202200239> [retrieved on 20231218], DOI: 10.1002/batt.202200239

## Description

### BACKGROUND OF THE INVENTION

### (a) Technical Field

The present invention relates to a system for finding black spots in a separator.

### (b) Description of the Related Art

As it is known, for a stable cell operation of the rechargeable battery, cells with fine short circuits between positive electrode and negative electrode are selected and managed in advance. The cells selected in this way are generally referred to as voltage change (DV, difference) defects, that is, "dV defects".

The dV defects are mainly caused by the short-circuits made by an oxidation of metal foreign materials inside the positive electrode and a reduction precipitation to the negative electrode and the separator. Conventionally, these short-circuits are called "black spots" because they appear to naked eyes as black dots. Therefore, in order to solve the dV defects, it is necessary to find these black spots and figure out which the metal foreign materials acted as a cause system.

The basic method for finding these black spots is to use a human eye. Because the short circuit appears as a black spot on the negative electrode and the separator, a person may observe the negative electrode and the separator with the naked eye and find the black spot.

However, because a visual inspection with the naked eye has a large dispersion among inspectors and may miss small black spots of hundreds of micrometers, even when several cells are dismantled and analyzed, the ratio for finding the black spots is very low.

WO2022114665A1 relates to a method and apparatus for classifying solar battery cell images using electroluminescence imaging, wherein images are first classified based on the extent of black spot coverage, and if above a threshold, further classified by defect type using a pre-trained model.

### SUMMARY

The present invention is set out in the appended set of claims. The present invention is related to a system for finding black spots of a separator that finds black spots that cause fine short circuits as dV defects.

An object of the present invention is to provide a system for finding black spots of a separator that automatically selects black spots. In addition, another object of the present invention is to provide a system for finding black spots of a separator that dramatically improves a discovery ratio of black spots and eliminates a dispersion according to an analyst.

A system for finding black spots in a separator includes a winding machine and a rewinder that take out and wind a separator from a rechargeable battery cell to produce and supply a sample of the separator; a foreign material removal unit that removes a foreign material from the surface of the separator; a first image measuring unit that obtains a first image of a part where black spots are estimated (or expected) in the separator (or which is to be checked for black spots) passing through the foreign material removal unit with a first camera and records the position of the first image; a second image measuring unit that first selects a part where black spots are estimated (or expected or which is to be checked for black spots) and acquires a second image of black spots and a foreign material other than black spots for the recorded position by a second camera by using the first image for the separator passing through the first image measuring unit; and a black spot sorting unit that displays (or outputs) the position after secondary selecting the black spots by deep learning the first image and the second image with a deep learning software. Preferably, the system for finding black spots in a separator comprise a winding machine and a rewinder, wherein the winding machine is configured to take out and wind a separator from a rechargeable battery cell to produce and supply a sample of the separator; a foreign material removal unit configured to remove a foreign material from the surface of the separator; a first image measuring unit configured to obtain a first image of a part where black spots are estimated in the separator passing through the foreign material removal unit with a first camera and to record the position of the first image; a second image measuring unit configured to first select a part where black spots are estimated by using the first image for the separator passing through the first image measuring unit and to acquire a second image of black spots and a foreign material other than black spots for the recorded position by a second camera; and a black spots sorting unit configured to secondary select black spots by deep learning the first image and the second image with a deep learning software and to display the position of the black spots.

The winding machine may (be configured to) unfold the selected electrode assembly, attach one surface of one separator among the unfolded positive electrode, negative electrode, and two separators to the winding machine core, and then wind it to produce a sample of the separator.

The foreign material removal unit may include a first adhesion roller that sequentially in contact with and rotates the first surface of the separator to remove foreign materials, and a first removal roller that has stronger adhesion than that of the first adhesion roller by a rotation in contact with the first adhesion roller; and a second adhesion roller that sequentially is contact with and rotates the second surface of the separator to remove foreign materials, and a second removal roller that has stronger adhesion than that of the second adhesion roller by a rotation in contact with the second adhesion roller. Preferably, the foreign material removal unit includes a first adhesion roller and a first removal roller configured to be sequentially in contact with and to rotate on a first surface of the separator to remove foreign materials, wherein the first removal roller has stronger adhesion than the first adhesion roller; and a second adhesion roller and a second removal roller configured to be sequentially in contact with and to rotate on a second surface of the separator to remove foreign materials, wherein the second removal roller has stronger adhesion than the second adhesion roller. In other words, the adhesion rollers may be configured to be directly contacted with the surfaces of the separator and the removal rollers may be configured to be indirectly contacted with the surfaces of the separator via the adhesion rollers.

The first camera may be formed of a line camera, and the first image measuring unit may include a roll-to-roll driving unit that stops when measuring the first image with the first camera and measures the first image from the separator. The roll-to-roll driving unit may be configured to stop when measuring the first image with the first camera and to measure the first image from the separator.

The second camera may be formed of an area camera, and the second image measuring unit may include a stage driving unit that follows the roll-to-roll driving unit and measures the second image from the separator. The stage driving unit may be configured to follow the roll-to-roll driving unit and to measure the second image from the separator.

The first image measuring unit may include a reflected light (unit) that lights one surface of the separator from the first camera side and reflects the light from the separator, and a transmission light (unit) that lights the other surface of the separator and transmits light through the separator. The reflected light unit may be configured to light one surface of the separator from the first camera side and to reflect the light from the separator, and the transmission light unit may be configured to light the other surface of the separator and to transmit light through the separator. The use of reflected light units and transmission light units provide images with additional information, thereby providing better results.

The reflected light (unit) may be disposed with 180 degrees by the first camera, and the transmission light (unit) may be disposed with 45 degrees by the first camera. The transmission light unit may be disposed in a range between zero and 90 degrees, preferably between 15 and 75 degrees, particularly preferred between 30 and 60 degrees with respect to the first camera.

The first image measuring unit may further include a first image position recorder for recording the position of the first image by recognizing coordinates during the movement of the separator by displaying a reference marking code on the separator with an equal interval.

The first image measuring unit may further include a first image position recorder that calculate the distance according to the movement time of the separator to set the Y coordinate, and records the position of the first image by setting the X coordinate in the width of the separator within the measurement area of the first camera. The first image position recorder may be configured to calculate the distance according to the movement time of the separator to set the Y coordinate, and to record the position of the first image by setting the X coordinate in the width of the separator within the measurement area of the first camera.

The first image measuring unit may further include a first sorting unit that first sorts black spots and foreign materials other than black spots by using a data that is capable of obtaining from the first image, and the second image measuring unit may further include a second sorting unit that performs deep learning on the first image and the second image to secondary sort the black spots and foreign materials other than black spots. The first sorting unit may be configured to first sort black spots and foreign materials other than black spots by using a data that is capable of obtaining from the first image and the second sorting unit may be configured to perform deep learning on the first image and the second image to secondary sort the black spots and foreign materials other than black spots.

The system for finding black spots in the separator according to an embodiment may further include a component analysis unit for analyzing components of the black spots selected by the black spots sorting unit.

The component analysis unit may (be configured to) analyze the components of the black spots with X-rays using by an X-ray fluorescence analysis (XRF) equipment.

The black spots may be formed from metal components

The metal component may include one of copper, zinc and stainless steel.

Foreign materials other than the black spots may include one of positive active material, negative active material, stamping, folding, separator foreign material, and side reactant.

The system for finding the black spots of the separator according to an embodiment first selects the first image by using the first camera, acquires the second image with the second camera for the position where the first image is recorded, deep-learns the first image and the second image to secondary select the black spots, and displays the position of the black spots, thereby reducing a dispersion of the black spots found among analysts, increasing a ratio of finding the black spots, and improving an inspection speed. In addition, the embodiment may further analyze the components of the black spots with X-rays by using the X-ray fluorescence analysis (XRF) equipment.

### BRIEF DESCRIPTION OF THE DRAWINGS

FIG. 1 is a flowchart of a method for finding black spots of a separator according to an embodiment.
FIG. 2 is a schematic diagram of a system for finding black spots of a separator according to an embodiment.
FIG. 3 is a schematic diagram of a foreign material removal unit in FIG. 2.
FIG. 4 is a schematic diagram of a first image measuring unit and a second image measuring unit in FIG. 2.
FIG. 5 is a view showing an optical image of actual black spots in a separator.
FIG. 6 is a view showing a first image obtained by acquiring all data obtained in a transmission mode for a separator.
FIG. 7 is a view showing a first image obtained by acquiring all data obtained from a reflection mode for a separator.
FIG. 8 is a view showing a plane image and a cross-section image of a separator showing a method of classifying black spots and foreign materials into gray values as a first image in a separator.
FIG. 9 is a view showing an image that primarily excludes foreign materials other than black spots by utilizing an inappropriate area ratio among a data obtained from a first image acquired from a first camera.
FIG. 10 is a view showing an image that primarily excludes foreign materials other than black spots by utilizing a peak change among a data obtained from a first image acquired from a first camera.
FIG. 11 is a view showing an image that primarily excludes foreign materials other than black spots by using a peak average among data obtained from the first image obtained from the first camera.
FIG. 12 is a view showing an image that primarily excludes foreign materials other than black spots by utilizing a gray value change among a data obtained from a first image acquired from a first camera.
FIG. 13 is a view showing an image that primarily excludes foreign materials other than black spots by utilizing an average gray value level among a data obtained from a first image acquired from a first camera.
FIG. 14 is a view showing an image that primarily excludes foreign materials other than black spots by utilizing a minimum gray value level among a data obtained from a first image acquired from a first camera.
FIG. 15 and FIG. 16 are views showing an image in which black spots are detected as a no good NG by deep learning a first image and a second image and secondary selecting black spots.
FIG. 17 is a view showing an image that detects foreign materials other than black spots as a good OK by secondary selecting materials other than black spots by deep learning a first image and a second image.
FIG. 18 is a cross-sectional view showing black spots detected in a separator and foreign materials other than black spots excluded from a first selection.

### DETAILED DESCRIPTION OF THE EMBODIMENTS

The present invention will be described more fully hereinafter with reference to the accompanying drawings, in which embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

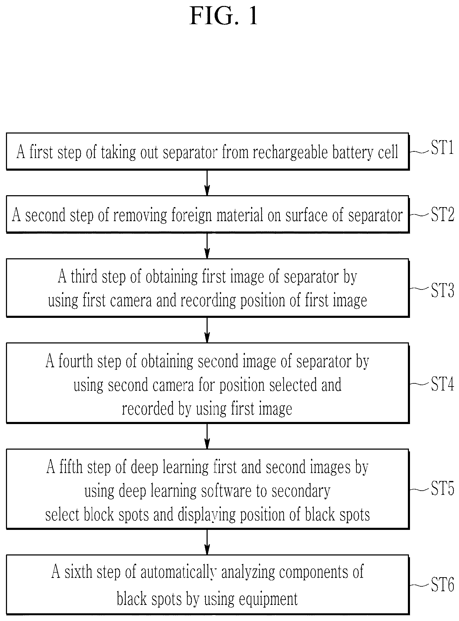

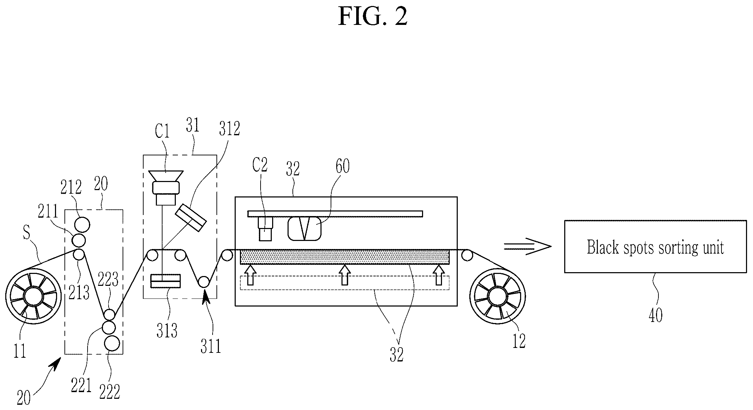

FIG. 1 is a flowchart of a method for finding black spots of a separator according to an embodiment. FIG. 2 is a schematic diagram of a system for finding black spots of a separator according to an embodiment. The method for finding the black spots of the separator and the system used for this method to find the black spots of the separator are explained together with reference to FIG. 1 and FIG. 2.

Referring to FIG. 1 and FIG. 2, the method for finding the black spots of the separator S according to an embodiment further includes a first step ST1, a second step ST2, a third step ST3, a fourth step ST4, and a fifth step ST5. The system for finding the block of the separator S includes a winding machine 11, a rewinder 12, a foreign material removal unit 20, a first image measuring unit 31, a second image measuring unit 32, and a black spots sorting unit 40.

In the first step ST1, the separator S is taken out from a rechargeable battery cell, e.g. by using the winding machine 11. The winding machine 11 is configured to manufacture a sample of the separator S by taking out and winding the separator from the rechargeable battery cell. The winding machine 11 acts as an unwinder to supply the separator S manufactured as a sample from the system, and the rewinder 12 is configured to rewind the separator S passing through the second image measuring unit 32 to be recovered from the system.

Preferably, in the first step ST1, after disassembling a case (e.g. a prismatic case) of the rechargeable battery cell (e.g. a prismatic battery cell) and taking out the plurality of electrode assemblies, the amount of a voltage drop is checked to select one electrode assembly out of multiple, i.e. out of the plurality of electrode assemblies, the selected electrode assembly is unfolded and one surface of the separator S of one among the unfolded positive electrode, negative electrode and two separators is attached to the core of the winding machine 11 to be winded, thereby preparing the sample of the separator S.

Therefore, the winding machine 11 may be configured to unfold the selected electrode assembly, attach one surface of the separator S of one of the unfolded positive electrode, negative electrode, and two separators to the core of the winding machine 11, and then wind it to manufacture the sample of the separator S. For sake of brevity, a more detailed description of the winding machine 11 will be omitted.

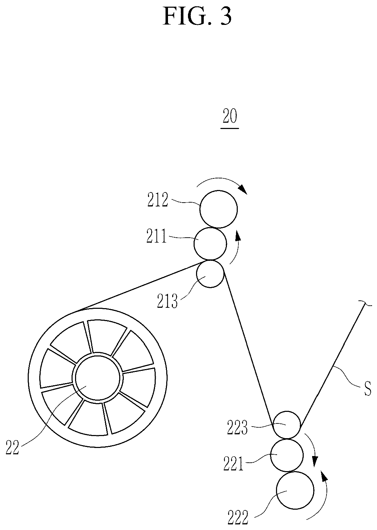

FIG. 3 is a schematic diagram of a foreign material removal unit 20 in FIG. 2. Referring to FIG. 1 to FIG. 3, in the second step ST2, a foreign material on the surface of the separator S is removed, e.g. by using the foreign material removal unit 20. The foreign material removal unit 20 is configured to remove the foreign material of the surface of the separator S. The foreign material removal unit 20 may include a first adhesion roller 211 and a first removal roller 212, and a second adhesion roller 221 and a second removal roller 222.

The second step ST2 may include a second/first step in which because the first adhesion roller 211 and the first removal roller 212 are sequentially in contact with the first surface of the separator S and rotated thereon, the foreign material on the first surface is removed by using the difference in viscosity between the first adhesion roller 211 and the first removal roller 212, and a second/second step in which because the second adhesion roller 221 and the second removal roller 222 are sequentially in contact with the second surface of the separator S and rotated thereon, the foreign material on the second surface is removed by using the viscosity difference between the second adhesion roller 221 and the second removal roller 222.

In the second/first step and the second/second step, despite the difference in the viscosity between the first adhesion roller 211 and the first removal roller 212 and the difference in the viscosity between the second adhesion roller 221 and the second removal roller 222, the black spots formed by a metal oxide penetrating the inside of the separator S may be maintained.

The first adhesion roller 211 and the first removal roller 212 are in contact and rotated sequentially with the first surface (the upper surface in FIG. 2 and FIG. 3) of the separator S, and the first removal roller 212 is in contact with the first adhesion roller 211 and rotated and has the stronger adhesion force than that of the first adhesion roller 211. That is, by using the viscosity difference, the foreign material of the first surface of the separator S supported by the first reaction force roller 213 is removed.

The second adhesion roller 221 and the second removal roller 222 are in contact with the second surface (the lower surface in FIG. 2 and FIG. 3), i.e. the first surface arranged opposite to the first second surface, of the separator S and rotated, and the second removal roller 222 is in contact with the second adhesion roller 221 and rotated and has the stronger adhesion force of that of the second adhesion roller 221. That is, by using the viscosity difference, the foreign material on the second surface of the separator S supported by the second reaction force roller 223 is removed.

The adhesion force may be divided into 5 steps: weak, medium and weak, medium, medium and strong, and strong. The first and second adhesion rollers 211 and 221 in contact with the first surface and the second surface to remove the foreign materials on the surface of the separator S may proceed as rollers with a medium adhesion. The first and second removal rollers 212 and 222, which transfer and remove the foreign material transferred to the first and second adhesion rollers 211 and 221, may proceed as rollers with a strong adhesion

In order to transfer the foreign material between the first and second adhesion rollers 211 and 221 and the first and second removal roller 212 and 222, there must be a difference of more than 2 steps out of 5 steps in the viscosity. Even in this case, the black spots formed by the metal oxide penetrating the inside of the separator S are maintained with an original state thereof.

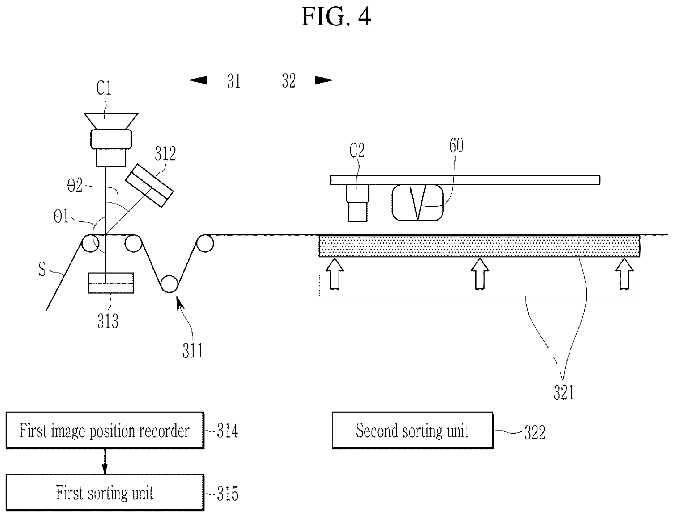

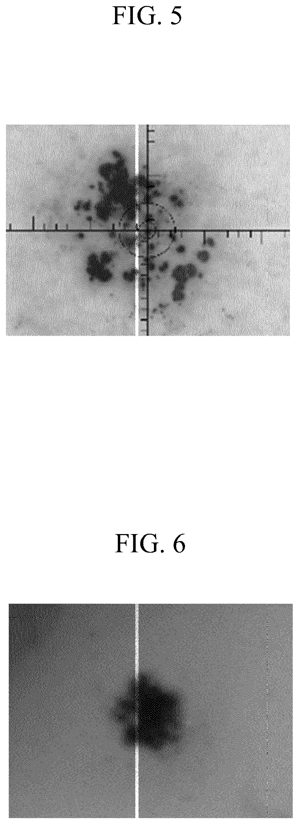

FIG. 4 is a schematic diagram of a first image measuring unit 31 and a second image measuring unit 32 in FIG. 2. Referring to FIG. 1, FIG. 2, and FIG. 4, in the third step ST3, a first image (referring to FIG. 5) for the part where the black spots are estimated in the separator S is obtained by using a first camera C1, and the position of the first image is recorded. In the third step ST3, a line camera is used as the first camera C1 to measure the black and white first image from the separator S on the roll-to-roll driving unit 311.

The first image measuring unit 31 is configured to obtain the first image for the part where the black spots are estimated in the separator S via the foreign material removal unit 20 by the first camera C1 and record the position of the first image. The first image measuring unit 31 may include a roll-to-roll driving unit 311 that stops when measuring the first image with the first camera C1 and measures the first image from the separator S.

In the fourth step ST4, the part where the black spots are estimated is first selected by using the first image, and the second image (referring to FIG. 6) for the black spots and the foreign materials other than the black spots in the separator S by using the second camera C2 for the recorded position is obtained. In the fourth step ST4, an area camera may be used as the second camera C2, and the second image may be measured from the separator S on the stage driving unit 321 following the roll-to-roll driving unit 311.

The second image measuring unit 32 is configured to first select the part where the black spots are estimated by using the first image of the separator S passed through the first image measuring unit 31, and to acquire the second image for the black spots and the foreign material other than the black spots for the recorded position by the second camera C2. The second image measuring unit 32 may be configured to follow the roll-to-roll driving unit 311 and may include a stage driving unit 321 that is configured to measure the second image from the separator S with the second camera C2.

Again, referring to FIG. 2 and FIG. 4, the first image measuring unit 31 may include a reflected light (unit) 312 and a transmission light (unit) 313. The reflected light (unit) 312 may be composed and disposed to reflect the light from the separator S by lighting one surface of the separator S from the first camera C1 side.

The transmission light (unit) 313 may be constructed and disposed to light the other surface of the separator S to transmit the light through the separator S. The reflected light (unit) 312 may be disposed to the first camera C1 with a first angle θ1, and the transmission light (unit) 313 may be disposed to the first camera C1 with a second angle θ2. As an example, the first angle θ1 may be 180 degrees and the second angle θ2 may be in a range between zero and 90 degrees, preferably between 15 and 75 degrees, particularly preferred between 30 and 60 degrees, most preferred 45 degrees.

The first image measuring unit 31 further may include a first image position recorder 314. The first image position recorder 314 marks a standard marking code on the separator S with an equal interval, recognizes the coordinates during the movement of the separator S, and records the position of the first image.

In addition, the first image position recorder 314 may be configured to calculate the distance according to the movement time of the separator S to set the Y coordinate, and to set the X coordinate in the width of the separator S in the measurement area of the first camera C1, thereby recording the position of the first image.

The first image measuring unit 31 may further include a first sorting unit 315 that is configured to first sort the black spots and the foreign materials other than the black spots by using a data obtained from the first image. The second image measuring unit 32 may further include a second sorting unit 322 that is configured to secondary sort the black spots and the foreign materials other than black spots by deep learning on the first image and the second image.

Referring to FIG. 1, FIG. 2, and FIG. 4, in the third step ST3, the first camera C1 may be fixed and the first image may be measured from the separator S in the stopped state of the roll-to-roll driving unit 311, and in the fourth step ST4, the second image may be measured from the moving separator S while moving the second camera C2 along with the stage driving unit 321, e.g. the raised stage driving unit 321. In the fourth step ST4, the first image obtained from all data obtained from the transmission mode and the reflection mode of the first camera C1 may be compared.

In the third step ST3, a standard marking code may be marked on the separator S with an equal interval to recognize a coordinate during the movement of the separator S, and the position of the first image may be recorded in the first image position recorder 314.

Also, in the third step ST3, the Y coordinate may be set by calculating the distance according to the movement time of the separator S, the X coordinate may be set in the width of the separator S within the measurement area of the first camera C1 to record the position of the first image to the first image position recorder 314.

In the fifth step ST5, the deep learning is performed on the first image and the second image with a deep learning software to secondary select the black spots and display the position of the black spots. The black spots sorting unit 40 is configured to perform the deep learning on the first image and the second image with the deep learning software, secondary select the black spots, and display the position.

In the fifth step ST5, the second sorting unit 322 may secondary select the black spots and the foreign materials other than the black spots through the deep learning on the first image and the second image. In the deep learning, the color image of 2.5µm resolution obtained by the second camera C2 may learned and selected by black spots BS and other foreign materials FM.

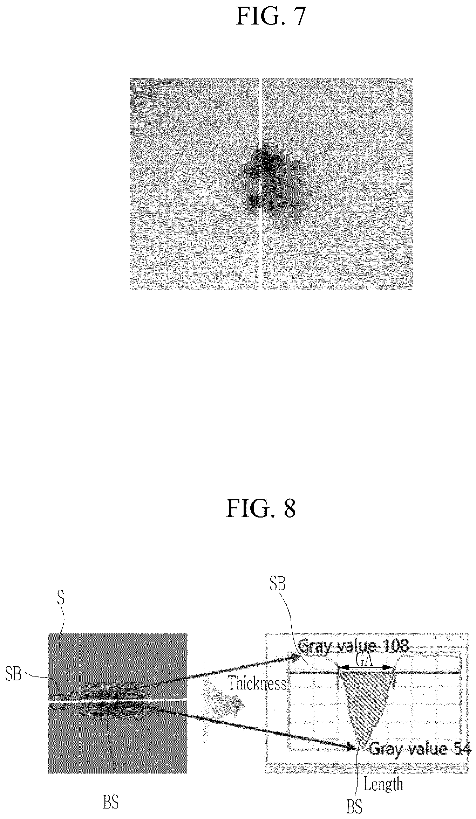

FIG. 5 is a view showing an optical image of actual black spots in a separator. FIG. 6 is a view showing a first image obtained by acquiring all data obtained in a transmission mode for a separator. FIG. 7 is a view showing a first image obtained by acquiring all data obtained from a reflection mode for a separator.

Referring to FIG. 5 to FIG. 7, the data obtained from the transmission mode and the reflection mode have differences from the actual black spots, and the images of the transmission mode and the reflection mode obtained from the third step ST3 may all be used and compared as the first image.

FIG. 8 is a view showing a plane image and a cross-section image of a separator showing a method of classifying black spots and foreign materials into gray values as a first image in a separator. Referring to FIG. 8, in the fourth step ST4, basically, using a gray value (a gray level) of a pixel in the first image, the part with the difference between a base and a peak (peak) is detected as a part where the black spots are estimated. The black spots and the foreign materials are distinguished by using other data.

FIG. 8 is the image of measuring the black spots of 100 µm size of the actual separator S. The pixel 1 of the black spots central portion is 10 µm. The gray value of the base SB of the separator S is 108, and the gray value of the central portion of the black spots BS is 54. The portion with the black spots BS is a good area GA as a detection area.

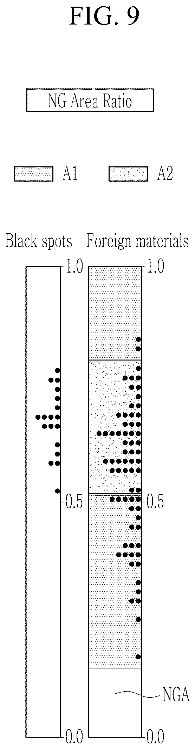

In the fourth step ST4, a no good area NGA that differ from the black spots for each data among the data may be excluded as an OR condition. At this time, the non-excluded good area GA may include a first area A1 capable of distinguishing the black spots BS and the foreign materials FM other than the black spots, and a second area A2 that is the same as the black spots (referring to FIG. 9 to FIG. 12).

In each data, the gray values of the no good area NGA and the good area GA, and the first area A1 and the second area A2 of the good area GA are shown in Table 1 and FIG. 9 to FIG. 12

**(Table 1)**

| Characteristics | Black spots | Foreign material |
|---|---|---|
| No good area ratio (FIG. 9) | 0.51-0.77 | 0.16-0.83 |
| Peak change (FIG. 10) | 15-89 | 4-103 |
| Peak average (FIG. 11) | 7-51 | 2.65-76 |
| Gray value change (FIG. 12) | -13- -70 | -4.5- -92 |
| Average gray value (FIG. 13) | 41-95 | 35-107 |
| Minimum gray value (FIG. 14) | 8-87 | 7-104 |
| Aspect ratio | <1.5 | <10 |

FIG. 9 is a view showing an image that primarily excludes foreign materials other than black spots by utilizing an inappropriate area ratio among a data obtained from a first image acquired from a first camera. Referring to FIG. 9, in the fourth step ST4, the no good area NGA may be excluded by using a ratio of the no good area in the data, thereby reducing an over-detection rate in which the foreign materials other than the black spots are excessively detected as the first image. That is, the no good area NGA except the first area A1 and the second area A2 may be excluded, and an exceeding area 0.83 may be excluded from the first area A1.

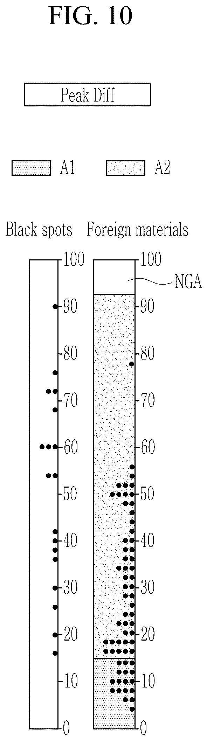

FIG. 10 is a view showing an image that primarily excludes foreign materials other than black spots by utilizing a peak change among a data obtained from a first image acquired from a first camera. Referring to FIG. 10, in the fourth step ST4, an over-detection rate in which the foreign materials other than the black spots are excessively detected as the first image may be reduced by excluding the no good area NGA by using a peak difference (peak diff) of the gray value (gray level) among the data. That is, the no good area NGA except the first area A1 and the second area A2 is excluded.

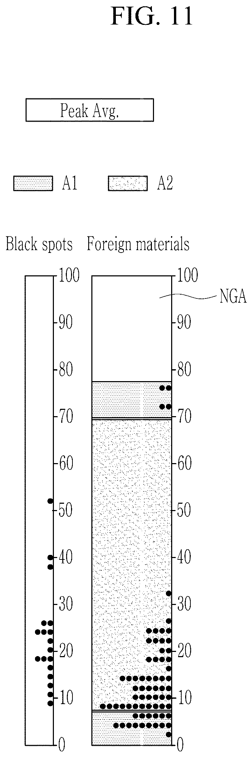

FIG. 11 is a view showing an image that primarily excludes foreign materials other than black spots by using a peak average among data obtained from the first image obtained from the first camera. Referring to FIG. 11, in the fourth step ST4, an over-detection rate in which the foreign materials other than the black spots are excessively detected as the first image may be reduced by excluding the no good area NGA by using a peak average (peak avg) of the gray value (gray level) among the data. That is, the no good area NGA except the first area A1 and the second area A2 is excluded.

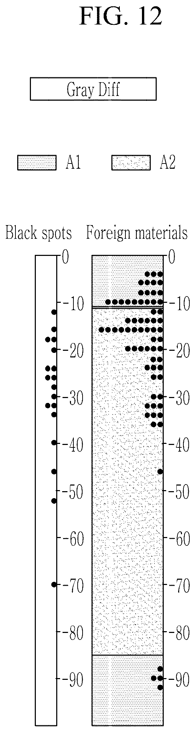

FIG. 12 is a view showing an image that primarily excludes foreign materials other than black spots by utilizing a gray value change among a data obtained from a first image acquired from a first camera. Referring to FIG. 12, in the fourth step ST4, an over-detection rate in which the foreign materials other than the black spots are excessively detected as the first image may be reduced by excluding the no good area NGA by using a difference (diff) of the gray value (gray level) among the data. That is, the no good area NGA except for the first area A1 and the second area A2 may be excluded, and an area exceeding a first gray value threshold, e.g. -4.5, and an area less than a second gray value threshold, e.g. -92, may be excluded from the first area A1.

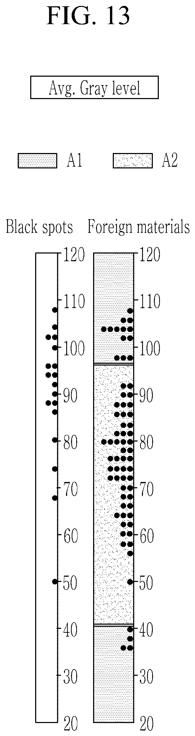

FIG. 13 is a view showing an image that primarily excludes foreign materials other than black spots by utilizing an average gray value level among a data obtained from a first image acquired from a first camera. Referring to FIG. 13, in the fourth step ST4, an over-detection rate in which the foreign materials other than the black spots are excessively detected as the first image may be reduced by excluding the no good area NGA by using a difference (avg gray diff) of the average gray value (gray level) among the data. That is, the no good area NGA except for the first area A1 and the second area A2 may be excluded, and an area less than a first average gray value threshold, e.g. 35, and an area exceeding a second average gray value threshold, e.g. 107, may be excluded from the first area A1.

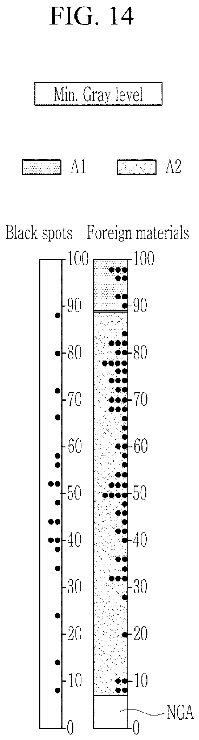

FIG. 14 is a view showing an image that primarily excludes foreign materials other than black spots by utilizing a minimum gray value level among a data obtained from a first image acquired from a first camera. Referring to FIG. 14, an over-detection rate in which the foreign materials other than the black spots are excessively detected as the first image may be reduced by excluding the no good area NGA by using a difference (min gray diff) of the minimum gray value (gray level) among the data. That is, the no good area NGA except the first area A1 and the second area A2 is excluded.

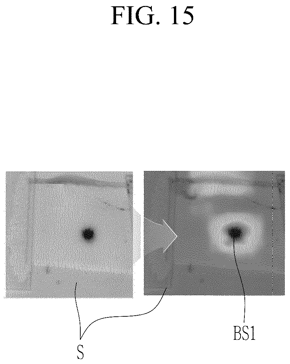

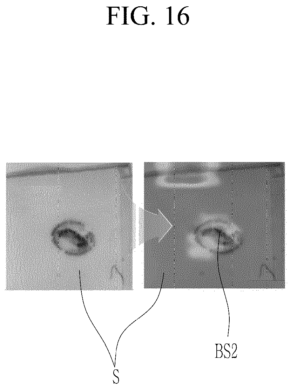

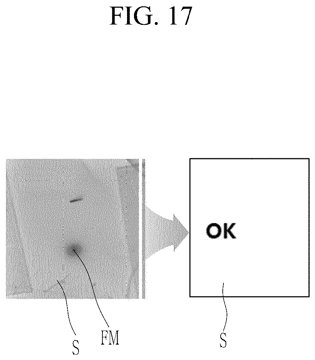

FIG. 15 and FIG. 16 are views showing an image in which black spots are detected as a no good NG by deep learning a first image and a second image and secondary selecting black spots. FIG. 17 is a view showing an image that detects foreign materials other than black spots as a good OK by secondary selecting materials other than black spots by deep learning a first image and a second image.

Referring to FIG. 15 to FIG. 17, in the fifth step ST5, the black spots may be secondary selected to detect the black spots as a no good NG by deep learning the first image and the second image, a material other than the black spots may be secondary selected, and the foreign material FM other than black spots may be detected as a good OK.

Again, referring to FIG. 1 and FIG. 2, the method for finding the black spots of the separator according to an embodiment may further include a sixth step ST6 of automatically analyzing components of the black spots by using an equipment. The black spots are characterized twice in the fourth step ST4 and the fifth step ST5, and in the sixth step ST6, the components of the black spots may be analyzed with X-rays by using an X-ray fluorescence analysis (XRF) equipment.

The system for finding the black spots of the separator of an embodiment may further include a component analysis unit 60 that is configured to analyze the components of the black spots selected in the black spots sorting unit 40. The component analysis unit 60 may be configured to analyze the components of the black spots with X-rays by using an X-ray Fluorescence Analysis (XRF) facility. The X-ray fluorescence analysis facility may be mounted together on the moving axis of the second camera C2 and moves to a specific coordinate to analyze the components of the black spots by using X-rays.

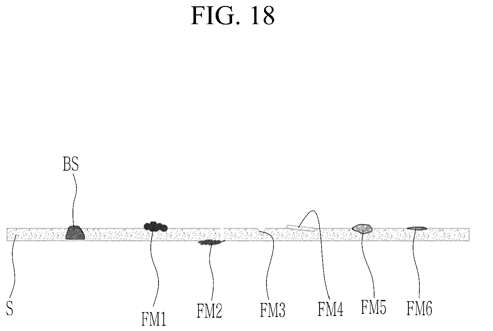

FIG. 18 is a cross-sectional view showing black spots detected in a separator and foreign materials other than black spots excluded from a first selection. FIG. 18 is the result found by the method and system of the embodiment in the sample separator S, which was not found with the naked eye. The black spots BS found with the method and system for finding the black spots of the separator of the embodiment are formed of metal components.

As an example, the metal component may include one of copper, zinc, and stainless steel. The foreign material FM other than the black spots may include one of a positive active material FM1, a negative active material FM2, a stamping FM3, a folding FM4, a separator foreign material FM5, and a side reactant FM6. The Foreign material FM other than the black spots is removed in the foreign material removal unit 20, so an over-detection of the first image is prevented.

While this invention has been described in connection with what is presently considered to be practical example embodiments, it is to be understood that the invention is not limited to the disclosed embodiments. On the contrary, it is intended to cover various modifications and equivalent arrangements included within the scope of the appended claims.

### <Description of symbols>

| | | | |
|---|---|---|---|
| 11: | winding machine | 12: | rewinder |
| 20: | foreign material removal unit | 31: | first image measuring unit |
| 32: | second image measuring unit | 40: | black spots sorting unit |
| 60: | component analysis unit | 211: | first adhesion roller |
| 212: | first removal roller | 221: | second adhesion roller |
| 222: | second removal roller | 213: | first reaction force roller |
| 223: | second reaction force roller | 311: | roll-to-roll driving unit |
| 312: | reflected light unit | 313: | transmission light unit |
| 314: | first image position recorder | 315: | first sorting unit |
| 321: | stage driving unit | 322: | second sorting unit |
| A1: | first area | A2: | second area |
| BS: | black spots | BS1, BS2: | black spots |
| C1: | first camera | C2: | second camera |
| FM: | foreign material | FM1: | positive active material |
| FM2: | negative active material | FM3: | stamping |
| FM4: | folding | FM5: | separator foreign material |
| FM6: | side reactant | GA: | good area |
| NGA: | no good area | S: | separator |
| SB: | separator base | θ1: | first angle |
| θ2: | second angle | | |

## Claims

1. A system for finding black spots in a separator comprising:
a winding machine (11) and a rewinder (12), wherein the winding machine (11) is configured to take out and wind a separator from a rechargeable battery cell to produce and supply a sample of the separator;
a foreign material removal unit (20) configured to remove a foreign material from the surface of the separator;
a first image measuring unit (31) configured to obtain a first image of a part where black spots are estimated in the separator passing through the foreign material removal unit (20) with a first camera (C1) and to record the position of the first image;
a second image measuring unit (32) configured to first select a part where black spots are estimated by using the first image for the separator passing through the first image measuring unit (31) and to acquire a second image of black spots and a foreign material other than black spots for the recorded position by a second camera (C2); and
a black spots sorting unit (40) configured to secondary select black spots by deep learning the first image and the second image with a deep learning software and to display the position of the black spots.

2. The system for finding black spots in the separator as claimed in claim 1, wherein:
the winding machine (11) is configured to unfold the selected electrode assembly, to attach one surface of one separator among the unfolded positive electrode, negative electrode, and two separators to core of the winding machine (11), and to then wind it to produce a sample of the separator.

3. The system for finding black spots in the separator as claimed in claim 1 or 2, wherein:
the foreign material removal unit (20) includes
a first adhesion roller (211) and a first removal roller (212) configured to be sequentially in contact with and to rotate on a first surface of the separator to remove foreign materials, wherein the first removal roller (212) has stronger adhesion than the first adhesion roller (211); and
a second adhesion roller (221) and a second removal roller (222) configured to be sequentially in contact with and to rotate on a second surface of the separator to remove foreign materials, wherein the second removal roller (222) has stronger adhesion than the second adhesion roller (221).

4. The system for finding black spots in the separator as claimed in any one of the preceding claims, wherein:
the first camera (C1) is formed of a line camera, and
the first image measuring unit (31) includes a roll-to-roll driving unit (311) configured to stop when measuring the first image with the first camera (C1) and to measure the first image from the separator.

5. The system for finding black spots in the separator as claimed in claim 4, wherein:
the second camera (C2) is formed of an area camera, and
the second image measuring unit (32) includes a stage driving unit (321) configured to follow the roll-to-roll driving unit (311) and to measure the second image from the separator.

6. The system for finding black spots in the separator as claimed in claim 4 or 5, wherein:
the first image measuring unit (31) includes
a reflected light unit (312) configured to light one surface of the separator from the first camera side and to reflect the light from the separator, and
a transmission light unit (313) configured to light the other surface of the separator and to transmit light through the separator.

7. The system for finding black spots in the separator as claimed in claim 6, wherein:
the reflected light unit (312) is disposed with 180 degrees by the first camera, and
the transmission light unit (313) is disposed with 45 degrees by the first camera.

8. The system for finding black spots in the separator as claimed in any one of the preceding claims, wherein:
the first image measuring unit (31) further includes a first image position recorder (314) for recording the position of the first image by recognizing coordinates during the movement of the separator by displaying a reference marking code on the separator with an equal interval.

9. The system for finding black spots in the separator as claimed in any one of the preceding claims, wherein:
the first image measuring unit (31) further includes a first image position recorder (314) configured to calculate the distance according to the movement time of the separator to set the Y coordinate, and to record the position of the first image by setting the X coordinate in the width of the separator within the measurement area of the first camera (C1).

10. The system for finding black spots in the separator as claimed in any one of the preceding claims, wherein:
the first image measuring unit (31) further includes a first sorting unit (315) configured to first sort black spots and foreign materials other than black spots by using a data that is capable of obtaining from the first image,
the second image measuring unit (32) further includes a second sorting unit (322) configured to perform deep learning on the first image and the second image to secondary sort the black spots and foreign materials other than black spots.

11. The system for finding black spots in the separator as claimed in any one of the preceding claims, further comprising:
a component analysis unit (60) for analyzing components of the black spots selected by the black spots sorting unit (40).

12. The system for finding black spots in the separator as claimed in claim 11, wherein:
the component analysis unit (60) is configured to analyze the components of the black spots with X-rays using by an X-ray fluorescence analysis, XRF, equipment.

13. The system for finding black spots in the separator as claimed in any one of the preceding claims, wherein:
the black spots are formed from metal components.

14. The system for finding black spots in the separator as claimed in claim 13, wherein:
the metal component includes one of copper, zinc and stainless steel.

15. The system for finding black spots in the separator as claimed in any one of the preceding claims, wherein:
foreign materials other than the black spots include one of positive active material, negative active material, stamping, folding, separator foreign material, and side reactant.

## Patentansprüche

1. System zum Auffinden von schwarzen Flecken in einem Separator, umfassend:
eine Wickelmaschine (11) und einen Aufwickler (12), wobei die Wickelmaschine (11) dazu konfiguriert ist, einen Separator aus einer wiederaufladbaren Batteriezelle herauszunehmen und aufzuwickeln, um eine Probe des Separators herzustellen und bereitzustellen;
eine Fremdstoffentfernungseinheit (20), die dazu konfiguriert ist, einen Fremdstoff von der Oberfläche des Separators zu entfernen;
eine erste Bildmesseinheit (31), die dazu konfiguriert ist, mit einer ersten Kamera (C1) ein erstes Bild eines Teils aufzunehmen, in dem schwarze Flecken in dem die Fremdstoffentfernungseinheit (20) passierenden Separator vermutet werden, und die Position des ersten Bildes aufzuzeichnen;
eine zweite Bildmesseinheit (32), die dazu konfiguriert ist, einen Teil primär auszuwählen, in dem schwarze Flecken durch Verwenden des ersten Bildes für den die erste Bildmesseinheit (31) passierenden Separator vermutet werden, und mit einer zweiten Kamera (C2) ein zweites Bild schwarzer Flecken und eines anderen Fremdstoffs als schwarze Flecken für die aufgezeichnete Position aufzunehmen; und
eine Schwarzfleck-Sortiereinheit (40), die dazu konfiguriert ist, schwarze Flecken durch Deep Learning des ersten Bildes und des zweiten Bildes mit einer Deep-Learning-Software sekundär auszuwählen und die Position der schwarzen Flecken anzuzeigen.

2. System zum Auffinden von schwarzen Flecken im Separator nach Anspruch 1, wobei:
die Wickelmaschine (11) dazu konfiguriert ist, die ausgewählte Elektrodenanordnung zu entfalten, eine Oberfläche eines Separators unter der entfalteten positiven Elektrode, der negativen Elektrode und zwei Separatoren an dem Kern der Wickelmaschine (11) anzubringen und diese dann aufzuwickeln, um eine Probe des Separators herzustellen.

3. System zum Auffinden von schwarzen Flecken im Separator nach Anspruch 1 oder 2, wobei:
die Fremdstoffentfernungseinheit (20) Folgendes umfasst:
eine erste Haftwalze (211) und eine erste Entfernungswalze (212), die so konfiguriert sind, dass sie nacheinander mit einer ersten Oberfläche des Separators in Kontakt kommen und sich auf dieser drehen, um Fremdstoffe zu entfernen, wobei die erste Entfernungswalze (212) eine stärkere Haftung als die erste Haftwalze (211) aufweist; und
eine zweite Haftwalze (221) und eine zweite Entfernungswalze (222), die so konfiguriert sind, dass sie nacheinander mit einer zweiten Oberfläche des Separators in Kontakt kommen und sich auf dieser drehen, um Fremdstoffe zu entfernen, wobei die zweite Entfernungswalze (222) eine stärkere Haftung als die zweite Haftwalze (221) aufweist.

4. System zum Auffinden von schwarzen Flecken im Separator nach einem der vorstehenden Ansprüche, wobei:
die erste Kamera (C1) durch eine Zeilenkamera gebildet ist und
die erste Bildmesseinheit (31) eine Roll-zu-Roll-Antriebseinheit (311) umfasst, die so konfiguriert ist, dass sie beim Messen des ersten Bildes mit der ersten Kamera (C1) anhält und das erste Bild vom Separator misst.

5. System zum Auffinden von schwarzen Flecken im Separator nach Anspruch 4, wobei:
die zweite Kamera (C2) durch eine Flächenkamera gebildet ist und
die zweite Bildmesseinheit (32) eine Tischantriebseinheit (321) umfasst, die dazu konfiguriert ist, der Roll-zu-Roll-Antriebseinheit (311) zu folgen und das zweite Bild vom Separator zu messen.

6. System zum Auffinden von schwarzen Flecken im Separator nach Anspruch 4 oder 5, wobei:
die erste Bildmesseinheit (31) Folgendes umfasst:
eine Reflektionslichteinheit (312), die dazu konfiguriert ist, eine Oberfläche des Separators von Seite der ersten Kamera aus zu beleuchten und das Licht vom Separator zu reflektieren, und
eine Transmissionslichteinheit (313), die dazu konfiguriert ist, die andere Oberfläche des Separators zu beleuchten und Licht durch den Separator hindurchzuleiten.

7. System zum Auffinden von schwarzen Flecken im Separator nach Anspruch 6, wobei die Reflektionslichteinheit (312) in einem Winkel von 180 Grad zur ersten Kamera und
die Transmissionslichteinheit (313) in einem Winkel von 45 Grad zur ersten Kamera angeordnet ist.

8. System zum Auffinden von schwarzen Flecken im Separator nach einem der vorstehenden Ansprüche, wobei:
die erste Bildmesseinheit (31) ferner einen ersten Bildpositionsrekorder (314) zum Aufzeichnen der Position des ersten Bildes durch Erkennen von Koordinaten während der Bewegung des Separators durch Anzeigen eines Referenzmarkierungscodes auf dem Separator in gleichen Abständen umfasst.

9. System zum Auffinden von schwarzen Flecken im Separator nach einem der vorstehenden Ansprüche, wobei:
die erste Bildmesseinheit (31) ferner einen ersten Bildpositionsrekorder (314) umfasst, der so konfiguriert ist, dass er den Abstand entsprechend der Bewegungszeit des Separators berechnet, um die Y-Koordinate festzulegen, und die Position des ersten Bildes aufzeichnet, indem er die X-Koordinate in der Breite des Separators innerhalb des Messbereichs der ersten Kamera (C1) festlegt.

10. System zum Auffinden von schwarzen Flecken im Separator nach einem der vorstehenden Ansprüche, wobei:
die erste Bildmesseinheit (31) ferner eine erste Sortiereinheit (315) umfasst, die dazu konfiguriert ist, schwarze Flecken und andere Fremdstoffe als schwarze Flecken unter Verwendung von Daten primär zu sortieren, die aus dem ersten Bild gewonnen werden können,
die zweite Bildmesseinheit (32) ferner eine zweite Sortiereinheit (322) umfasst, die dazu konfiguriert ist, Deep Learning an dem ersten Bild und dem zweiten Bild durchzuführen, um die schwarzen Flecken und andere Fremdstoffe als schwarze Flecken sekundär zu sortieren.

11. System zum Auffinden von schwarzen Flecken im Separator nach einem der vorstehenden Ansprüche, umfassend ferner:
eine Komponentenanalyseeinheit (60) zum Analysieren von Komponenten der von der Schwarzfleck-Sortiereinheit (40) ausgewählten schwarzen Flecken.

12. System zum Auffinden von schwarzen Flecken im Separator nach Anspruch 11, wobei:
die Komponentenanalyseeinheit (60) dazu konfiguriert ist, die Komponenten der schwarzen Flecken mit Röntgenstrahlen unter Verwendung eines Röntgenfluoreszenzanalyse (XRF)-Geräts zu analysieren.

13. System zum Auffinden von schwarzen Flecken im Separator nach einem der vorstehenden Ansprüche, wobei:
die schwarzen Flecken aus Metallkomponenten bestehen.

14. System zum Auffinden von schwarzen Flecken im Separator nach Anspruch 13, wobei:
die Metallkomponente eine der folgenden Substanzen umfasst: Kupfer, Zink und Edelstahl.

15. System zum Auffinden von schwarzen Flecken im Separator nach einem der vorstehenden Ansprüche, wobei:
andere Fremdstoffe als die schwarzen Flecken eines von Folgendem umfassen: positives aktives Material, negatives aktives Material, Stanzabfälle, Falzabfälle, Separator-Fremdstoffe und seitliche Reaktionsprodukte.

## Revendications

1. Système pour rechercher des taches noires dans un séparateur comportant :
une machine d'enroulement (11) et un enrouleur (12), dans lequel la machine d'enroulement (11) est configurée pour extraire et enrouler un séparateur d'une cellule de batterie rechargeable pour produire et fournir un échantillon du séparateur ;
une unité d'élimination de matière étrangère (20) configurée pour éliminer une matière étrangère de la surface du séparateur ;
une unité de mesure de première image (31) configurée pour obtenir une première image d'une pièce où des taches noires sont estimées dans le séparateur passant à travers l'unité d'enlèvement de matière étrangère (20) avec une première caméra (C1) et pour enregistrer la position de la première image ;
une unité de mesure de seconde image (32) configurée pour sélectionner d'abord une pièce où des taches noires sont estimées en utilisant la première image pour le séparateur passant à travers l'unité de mesure de première image (31) et pour acquérir une seconde image de taches noires et d'une matière étrangère autre que des taches noires pour la position enregistrée par une seconde caméra (C2) ; et
une unité de tri de taches noires (40) configurée pour sélectionner secondairement des taches noires par apprentissage profond de la première image et de la seconde image avec un logiciel d'apprentissage profond et pour afficher la position des taches noires.

2. Système pour rechercher des taches noires dans le séparateur selon la revendication 1, dans lequel :
la machine d'enroulement (11) est configurée pour déplier l'ensemble d'électrodes sélectionné, pour fixer une surface d'un séparateur parmi l'électrode positive dépliée, l'électrode négative dépliée et deux séparateurs au noyau de la machine d'enroulement (11), et pour ensuite l'enrouler pour produire un échantillon du séparateur.

3. Système pour rechercher des taches noires dans le séparateur selon la revendication 1 ou 2, dans lequel :
l'unité d'élimination de matière étrangère (20) inclut
un premier rouleau d'adhérence (211) et un premier rouleau d'élimination (212) configurés pour être en contact séquentiel avec et pour tourner sur une première surface du séparateur pour éliminer des matières étrangères, dans lequel le premier rouleau d'élimination (212) présente une adhérence plus forte que le premier rouleau d'adhérence (211) ; et
un second rouleau d'adhérence (221) et un second rouleau d'élimination (222) configurés pour être en contact séquentiel avec et pour tourner sur une seconde surface du séparateur pour éliminer des matières étrangères, dans lequel le second rouleau d'élimination (222) présente une adhérence plus forte que le second rouleau d'adhérence (221).

4. Système pour rechercher des taches noires dans le séparateur selon l'une quelconque des revendications précédentes, dans lequel :
la première caméra (C1) est formée d'une caméra linéaire, et
l'unité de mesure de première image (31) inclut une unité d'entraînement de rouleau à rouleau (311) configurée pour s'arrêter lors de la mesure de la première image avec la première caméra (C1) et pour mesurer la première image à partir du séparateur.

5. Système pour rechercher des taches noires dans le séparateur selon la revendication 4, dans lequel :
la seconde caméra (C2) est formée d'une caméra de zone, et
l'unité de mesure de seconde image (32) inclut une unité d'entraînement de platine (321) configurée pour suivre l'unité d'entraînement de rouleau à rouleau (311) et pour mesurer la seconde image à partir du séparateur.

6. Système pour rechercher des taches noires dans le séparateur selon la revendication 4 ou 5, dans lequel :
l'unité de mesure de première image (31) inclut
une unité de lumière réfléchie (312) configurée pour éclairer une surface du séparateur depuis le côté première caméra et pour réfléchir la lumière à partir du séparateur, et
une unité de lumière de transmission (313) configurée pour éclairer l'autre surface du séparateur et pour transmettre de la lumière à travers le séparateur.

7. Système pour rechercher des taches noires dans le séparateur selon la revendication 6, dans lequel :
l'unité de lumière réfléchie (312) est disposée à 180 degrés par rapport à la première caméra, et
l'unité de lumière de transmission (313) est disposée à 45 degrés par rapport à la première caméra.

8. Système pour rechercher des taches noires dans le séparateur selon l'une quelconque des revendications précédentes, dans lequel :
l'unité de mesure de première image (31) inclut en outre un enregistreur de position de première image (314) pour enregistrer la position de la première image par reconnaissance des coordonnées pendant le mouvement du séparateur par affichage d'un code de marquage de référence sur le séparateur à un intervalle égal.

9. Système pour rechercher des taches noires dans le séparateur selon l'une quelconque des revendications précédentes, dans lequel :
l'unité de mesure de première image (31) inclut en outre un enregistreur de position de première image (314) configuré pour calculer la distance en fonction du temps de déplacement du séparateur pour régler la coordonnée Y, et pour enregistrer la position de la première image par réglage de la coordonnée X dans la largeur du séparateur au sein de la zone de mesure de la première caméra (C1).

10. Système pour rechercher des taches noires dans le séparateur selon l'une quelconque des revendications précédentes, dans lequel :
l'unité de mesure de première image (31) inclut en outre une première unité de tri (315) configurée pour trier d'abord les taches noires et les matières étrangères autres que les taches noires en utilisant une donnée qui peut être obtenue à partir de la première image,
l'unité de mesure de seconde image (32) inclut en outre une seconde unité de tri (322) configurée pour effectuer un apprentissage profond sur la première image et la seconde image pour trier secondairement les taches noires et les matières étrangères autres que les taches noires.

11. Système pour rechercher des taches noires dans le séparateur selon l'une quelconque des revendications précédentes, comportant en outre :
une unité d'analyse de composants (60) pour analyser des composants des taches noires sélectionnées par l'unité de tri de taches noires (40).

12. Système pour rechercher des taches noires dans le séparateur selon la revendication 11, dans lequel :
l'unité d'analyse de composants (60) est configurée pour analyser les composants des taches noires avec des rayons X à l'aide d'un équipement d'analyse par fluorescence X, XRF.

13. Système pour rechercher des taches noires dans le séparateur selon l'une quelconque des revendications précédentes, dans lequel :
les taches noires sont formées par des composants métalliques.

14. Système pour rechercher des taches noires dans le séparateur selon la revendication 13, dans lequel :
le composant métallique inclut un parmi le cuivre, le zinc et l'acier inoxydable.

15. Système pour rechercher des taches noires dans le séparateur selon l'une quelconque des revendications précédentes, dans lequel :
les matières étrangères autres que les taches noires incluent un parmi une matière active positive, une matière active négative, un estampage, un pliage, une matière étrangère de séparateur et un réactif latéral.
